# EUROPEAN PATENT SPECIFICATION

(11) **EP 3 477 910 B1**
(45) Date of publication and mention of the grant of the patent: **24.06.2020**
(21) Application number: 16911453.5
(22) Date of filing: 18.09.2016
(51) Int. Cl.: H04L 29/08

(54) **ACCELERATION METHOD, DEVICE, AND SYSTEM FOR P2P DATA**
BESCHLEUNIGUNGSVERFAHREN, -VORRICHTUNG UND -SYSTEM FÜR P2P-DATEN
PROCÉDÉ, DISPOSITIF ET SYSTÈME D'ACCÉLÉRATION POUR DONNÉES P2P

(30) Priority: 02.08.2016 CN 201610626593
(43) Date of publication of application: 01.05.2019
(73) Proprietor: Wangsu Science & Technology Co., Ltd., Shanghai 200030 (CN)
(72) Inventor: HUANG, Zhihui, Shanghai 200030 (CN); LIU, Xiaopeng, Shanghai 200030 (CN)
(74) Representative: Hanna Moore + Curley
(86) International application number: PCT/CN2016/099177
(87) International publication number: WO 2018/023858

(56) References cited:
- CN-A- 1 812 344
- CN-A- 1 812 344
- CN-A- 102 833 337
- CN-A- 102 833 337
- CN-A- 104 158 868
- US-A1- 2006 212 542
- US-A1- 2007 073 878
- US-A1- 2010 095 064
- US-A1- 2011 128 972
- US-A1- 2012 059 864

## Description

### FIELD OF THE DISCLOSURE

The present disclosure relates to the field of computer and, more particularly, relates to an acceleration method, a device, and a system for peer-to-peer (P2P) data.

### BACKGROUND

Currently, a method for P2P cache acceleration that is transparent to the users is to integrate the transparent proxy module and the P2P cache acceleration module into one service program to be deployed at the same device. Such deployment manner causes the device to process a great variety of tasks and have a rather high load. Under the condition of high load, the data packets may be delayed and lost, which eventually affects the user's internet surfing experience. Further, the caching module requires a large amount of disk space, and the device is huge and cannot be easily expanded. Thus, the proxy module and the P2P cache acceleration module may be deployed at different devices, which makes the proxy device and the P2P cache acceleration device to perform specialized operations.

However, if the proxy module and the P2P cache acceleration module are respectively deployed at different devices, the load-balancing issue of the P2P caching device, the safety issue of P2P cache acceleration device, and the issue that the proxy fails to send data back to source due to the loss of source data lost may occur.

Directed towards issues in existing P2P cache acceleration that load balancing can hardly performed on various caching devices when the proxy device and the cache acceleration device are separately deployed, by far, no effective solutions have been proposed.

The state of the art is represented by the respective disclosures of US patent specification no. US 2012/059 864 and CN 102 833 377.

### BRIEF SUMMARY OF THE DISCLOSURE

The invention is defined by the independent claims. Additional aspects are defined by the dependent claims.

Embodiments of the present disclosure provide an acceleration method, a device, and a system for P2P data, thereby at least solving the technical issue that load balancing can hardly performed on various caching device when the proxy device and the cache acceleration device are separately deployed.

According to one aspect of the present disclosure, a P2P data acceleration method is provided, including: receiving an authorization information packet sent by a client, and acquiring a file identifier of the authorization information packet, where the file identifier corresponds to a file requested for downloading by the client; based on the file identifier, obtaining identification information of a target cache acceleration device corresponding to the file identifier through a preset algorithm; replacing an original destination identification information of the authorization information packet with the identification information of the target cache acceleration device; and sending the authorization information packet to the target cache acceleration device based on the replaced identification information of the authorization information packet.

According to another aspect of the present disclosure, a P2P data acceleration device is further provided, including: a receiving module, configured to receive an authorization information packet sent by a client and acquire a file identifier of the authorization information packet, where the file identifier corresponds to a file requested for downloading by the client; a determining module, configured to, based on the file identifier, obtain identification information of a target cache acceleration device corresponding to the file identifier through a preset algorithm; a replacing module, configured to replace original destination identification information of the authorization information packet with the identification information of the target cache acceleration device; and a sending module, configured to send the authorization information packet to the target cache acceleration device based on the replaced identification information of the authorization information packet.

According to another aspect of the present disclosure, a P2P data acceleration system is provided, including: a client, configured to send an authorization information packet to a proxy device; the proxy device that communicates with the client, configured to obtain identification information of a target cache acceleration device corresponding to the file identifier through a preset algorithm based on the file identifier, replace original destination identification information of the authorization information packet with the identification information of the target cache acceleration device, and send the authorization information packet to the target cache acceleration device based on the replaced identification information of the authorization information packet. The file identifier corresponds to the file requested for downloading by the client, and the target cache acceleration device communicates with the proxy device and is configured to return a file corresponding to the file identifier to the proxy device.

In embodiments of the present disclosure, the authorization information packet sent by the client is received, and the file identifier of the authorization information packet is acquired. The identification information of the target cache acceleration device corresponding to the file identifier is obtained based on the file identifier through a preset algorithm, and the original destination identification information of the identification information packet is replaced with the identification information of the target cache acceleration device. The authorization information packet is sent to the target cache acceleration device based on the replaced identification information of the authorization information packet. In the aforementioned solution, a file ID may be matched with a corresponding target cache acceleration device based on the file ID included in the authorization information packet through a preset algorithm, and identification information of the matched target cache acceleration device may be acquired. Accordingly, the proxy device may send the authorization information packet to the target cache acceleration device based on the identification information of the target cache acceleration device. Thus, the technical issue in existing P2P cache acceleration techniques that load balancing can hardly be performed on various caching devices when the proxy device and the cache acceleration device are separately deployed may be solved. Accordingly, the technical effect of performing load balancing on the cache acceleration devices is realized, and the user's internet surfing experience is improved.

### BRIEF DESCRIPTION OF THE DRAWINGS

The accompanying drawings illustrated herein are used to provide further understanding of the present disclosure, thus forming a part of the present disclosure. Exemplary embodiments of the present disclosure and illustrations thereof are used to describe the present disclosure without forming inappropriate limitations on the present disclosure. In the accompanying drawings:
FIG. 1 illustrates a flow chart of a P2P data acceleration method according to embodiments of the present disclosure;
FIG. 2 illustrates a schematic view of an optional P2P data acceleration method according to embodiments of the present disclosure;
FIG. 3 illustrates a structural schematic view of a P2P data acceleration device according to embodiments of the present disclosure; and
FIG. 4 illustrates a structural schematic view of a P2P data acceleration system according to embodiments of the present disclosure.

### DETAILED DESCRIPTION

To make those skilled in the relevant art better understand solutions of the present disclosure, the technical solutions of the present disclosure are described in a clear and complete manner with reference to the accompanying drawings of the present disclosure. Obviously, the embodiments described herein are merely some embodiments of the present disclosure, but not entire embodiments. Based on embodiments of the present disclosure, other embodiments derived by those ordinarily skilled in the relevant art without creative labor shall all fall within the protection scope of the present disclosure.

It should be noted that, in the specification, claims, and accompanying drawings of the present disclosure, terms such as "first" and "second" are merely used to differentiate similar objects but are not intended to describe a certain order or sequence. It should be understood in such a way that the applied data may be exchangeable under appropriate situations, such that the embodiments of the present disclosure described herein may be implemented through orders illustrated or described herein. Further, the terms "including", "comprising" or any other variations are intended to cover non-exclusive including. For example, the process, method, article, or device including a series of steps or units are not necessarily limited to those clearly listed steps or units, but may include other steps or units intrinsic to the process, method, article or device that are not clearly listed.

### Embodiment 1

According to embodiments of the present disclosure, a method embodiment of a P2P data acceleration method is provided. It should be noted that, steps illustrated in the flow chart of the accompanying drawings may be executed at a computer system having a series of computer-executable commands. Further, though logic sequence is illustrated in the flow chart, under certain situations, steps different from the order disclosed or described herein may be applied.

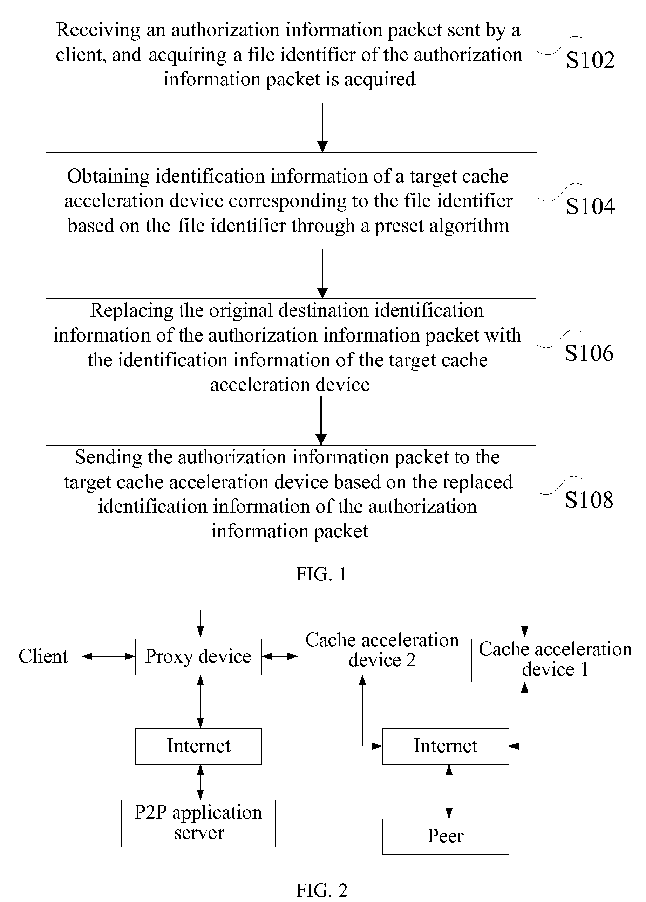

FIG. 1 illustrates a flow chart of a P2P data acceleration method according to embodiments of the present disclosure. As shown in FIG. 1, the method includes following steps.

At Step S102, receiving an authorization information packet sent by a client, and acquiring a file identifier of the authorization information packet, where the file identifier corresponds to a file requested for downloading by the client.

Specifically, the aforementioned authorization information packet may be a handshake packet. The handshake packet is different from the authorization information packet used during the three-way handshake of the TCP protocol, but is an authorization information packet used in an authorization approach self-defined by the P2P at the application layer. The aforementioned file identifier is configured to characterize the file requested for downloading by different clients. For example, the file identifier may be the *hash* value calculated based on the file requested for downloading by the client.

In an optional embodiment, a data ingress device (e.g., proxy device) acquires a service data packet sent by a client to a destination server and analyzes content of the service data packet based on characteristics of the handshake packet, thereby obtaining a P2P handshake packet.

At Step S104, based on the file identifier, obtaining identification information of a target cache acceleration device corresponding to the file identifier through a preset algorithm.

Specifically, the identification information of the target cache acceleration device is configured to characterize the target cache acceleration device, and the proxy device may, based on the identification information of the cache acceleration device, send the data packet to the cache acceleration device corresponding to the identification information.

In an optional embodiment, to satisfy the load balancing requirements of the cache acceleration device, the same file-downloading demands may be assigned to the same target cache acceleration device. For example, when the same file IDs are acquired, the identification information packets that include the same file ID are assigned to the same cache acceleration device through the preset algorithm.

At Step S106, replacing original destination identification information of the authorization information packet with identification information of the target cache acceleration device.

Specifically, the original destination end of the authorization information packet may be a peer, and the original destination identification information of the aforementioned authorization information packet is the identification information of the peer.

In one optional embodiment, the identification information of the target cache acceleration device is obtained through the preset algorithm, where the identification information includes IP address and port number. The IP address and the port number of the peer included in the authorization information packet are replaced with the IP address and the port number of the target cache acceleration device.

At Step S108, sending the authorization information packet to the target cache acceleration device based on the replaced identification information of the authorization information packet.

In an optional embodiment, after replacing the original destination identification information with the identification information of the target cache acceleration device, the proxy device sends the authorization information packet to the target cache acceleration device based on the identification information of the target cache acceleration device.

Further, the original source identification information of the service data packet may be replaced with the identification information of the proxy device, where the identification information of the proxy device includes IP address and port number of the proxy device. Thus, when the service data packet is sent to the cache acceleration device, the cache acceleration device may send a response packet to the proxy device, thus allowing the proxy device to perform effective management and control over the data interaction.

In embodiments of the present disclosure, the authorization information packet sent by the client is received, and the file identifier of the authorization information packet is acquired. The identification information of the target cache acceleration device corresponding to the file identifier is obtained based on the file identifier through a preset algorithm, and the original destination identification information of the identification information packet is replaced with the identification information of the target cache acceleration device. The authorization information packet is sent to the target cache acceleration device based on the replaced identification information of the authorization information packet. In the aforementioned solution, a file ID may be matched with a corresponding target cache acceleration device based on the file ID included in the authorization information packet through a preset algorithm, and identification information of the matched target cache acceleration device may be acquired. Accordingly, the proxy device may send the authorization information packet to the target cache acceleration device based on the identification information of the target cache acceleration device. Thus, the technical issue in existing P2P cache acceleration techniques that load balancing can hardly be performed on various caching devices when the proxy device and the cache acceleration device are separately deployed may be solved. Thus, the technical effects of performing load balancing on the cache acceleration devices are realized, and the user's internet surfing experience is improved.

Optionally, based on the aforementioned embodiments, obtaining the file identifier of the authorization information packet includes:
Step S1021, searching for a byte at a preset location of the authorization information packet.
Step S1023, using the byte at the preset location as a starting point to acquire a preset number of bytes consecutively, thereby obtaining the file identifier.

In an optional embodiment, using the file identifier being a file ID as an example, for the disclosed P2P protocol - BitTorrent (bt), the file ID may be formed by 20 consecutive bytes starting from the 49^{th} byte of the authorization information packet. That is, the 49^{th} byte is searched for in the authorization information packet, and the 49^{th} byte is used as the starting byte to acquire 20 bytes consecutively, thereby obtaining the file ID.

As such, the disclosed step may search for the byte at the preset location of the authorization information packet, and use the byte at the preset location as the starting point to acquire a preset number of bytes consecutively, thereby obtaining the file identifier. The above-described solution realizes the technical effects of acquiring the file identifier from the authorization information packet.

Optionally, based on the aforementioned embodiments, obtaining the identification information of the target cache acceleration device corresponding to the file identifier based on the file identifier through the preset algorithm may include:
Step S1025, searching for the identification information of the target cache acceleration device corresponding to the file identifier from a preset mapping relationship between file identifiers and cache acceleration devices through the consistent hashing algorithm. The identification information of the target cache acceleration device includes: IP address and port number of the target cache acceleration device.

In the aforementioned steps, the consistent hashing algorithm is configured to assign the same cache acceleration device to the authorization information packets having the same file identifier. In an optional embodiment, the five authorization information packets A1, B2, C3, D4, and E5 may respectively request the identification information of the target cache acceleration device from the proxy device, and the files requested for downloading by the five authorization information packets may be file A, file B, file A, file C, and file B, respectively. Correspondingly, there are three cache acceleration devices *a, b,* and c respectively storing the file A, the file B, and file C. The consistent hashing algorithm may be applied for calculation, and the identification information of the cache acceleration device *a* may be assigned to the authorization information packets A1 and C3, the identification information of the cache acceleration device *b* may be assigned to the authorization information packets B2 and E5, and the identification information of the cache acceleration device *c* may be assigned to the authorization information packet D4. After the IP address and the port number of the target cache acceleration device is obtained based on the file identifier through the consistent hashing algorithm, the proxy device may send the authorization information packet to the target cache acceleration device based on the IP address and port number of the target cache acceleration device.

As such, the identification information of the target cache acceleration device corresponding to the file identifier may be searched for from the preset mapping relationship between the file identifiers and the cache acceleration devices through the consistent hashing algorithm. The aforementioned solution implements the technical effects of performing load balancing on the cache acceleration devices through the consistent hashing algorithm.

Optionally, based on the disclosed embodiments, after receiving the authorization information packet sent by the client, the aforementioned method may further include:
Step S1010, storing quintuple information of the authorization information packet, where the quintuple information includes IP address and port number of the client.

Specifically, in the aforementioned step, the quintuple information may include: source IP address, source port, destination IP address, destination port, and transmission layer protocol.

In an optional embodiment, using the example in which the client transmits the authorization information packet to the proxy device, the quintuple information of the aforementioned authorization information packet may include: client IP address, client port, peer IP address, peer port, and transmission layer protocol.

Optionally, based on the aforementioned embodiments, when the proxy device receives the response information returned by the target cache acceleration device, the identification information of the target cache acceleration device may be hided, and the steps of hiding the identification information of the target cache acceleration device includes followings.

Step S1012, replacing, by the proxy device, source address and port number of the response information with IP address and port number of a peer included in the quintuple information, where the source address and the port number of the response information are IP address and port number of the target cache acceleration device.

In the aforementioned steps, the identification information of the target cache acceleration device is hided to prevent the client from attacking the cache acceleration device after knowing the identification information of the cache acceleration device. Accordingly, the technical effects of ensuring the device safety of the back-end P2P cache acceleration device are ensured.

In an optional embodiment, after the proxy device receives the response information returned by the target cache acceleration device, because the response information is the file returned by the target cache acceleration device, the source identification information (including IP address and port number) of the response information is the identification information of the target cache acceleration device. To hide the identification information of the target cache acceleration device, i.e., to prevent the client from acquiring the identification information of the target cache acceleration device, the source identification information of the response information is replaced with the identification information (including IP address and port number) of the peer.

As such, in the aforementioned steps of the present disclosure, when the proxy device receives the response information returned by the target cache acceleration device, the source address and the port number of the response information are replaced with the IP address and the port number of the client included in the quintuple information to hide the identification information of the target cache acceleration device. The aforementioned solutions prevent the client from attacking the cache acceleration device after knowing the identification information of the cache acceleration device, thereby achieving the technical effects of device safety of the back-end P2P cache acceleration device.

Optionally, based on the aforementioned embodiments, if within a preset period of time, quintuple information the same as the stored quintuple information is detected, the authorization information packet corresponding to the quintuple information that is the same as the stored quintuple information may perform data interaction based on a path of the authorization information packet corresponding to the stored quintuple information.

In an optional embodiment, an example in which the client sends an authorization information packet that includes quintuple information *F* to the proxy device is provided, and the proxy device is assumed to send the authorization information packet that includes the quintuple information *F* to a corresponding target cache acceleration device and to feedback the response information returned by the target cache acceleration device to the client. Within the preset period of time, when the proxy device once again receives an authorization information packet including the quintuple information *F,* the IP address of the target cache acceleration device to which the authorization information packet that includes the quintuple information F corresponds no longer needs to be calculated through an algorithm. Further, the authorization information packet may be sent based on the first-time-calculated IP address of the target cache acceleration device to which the authorization information packet *F* that includes the quintuple information F corresponds.

As such, the aforementioned steps of the present disclosure process the authorization data packets that include the same quintuple information using the same data interaction path. No repeated calculation is needed, and the path does not need to be changed. Accordingly, the number of tasks of the proxy device is decreased, and the technical effects of improving the task-processing efficiency is achieved.

Optionally, based on the aforementioned embodiments, before sending the authorization information packet to the target cache acceleration device based on the replaced identification information of the authorization information packet, the method further includes followings.

At Step S1014, adding identification information of a peer of the authorization information packet to head and/or tail of the authorization information packet with replaced identification information based on a preset protocol format, where the identification information of the peer is original destination identification information.

Specifically, in the aforementioned steps, the aforementioned peer is the destination end requested by the authorization information packet when requesting to download a file without the cache acceleration device. Usually, when the cache acceleration device does not hit the file requested for downloading in the authorization information packet, the cache acceleration device needs to forward the authorization information packet to the peer.

In an optional embodiment, the identification information of the peer may be replaced with the identification information of the target cache acceleration device, and the identification information of the peer may be added to the head and/or tail of the authorization information packet based on the preset protocol. The above-described encapsulated authorization information packet may be sent to the target cache acceleration device. Further, the identification information of the peer includes the IP and port number of the peer. In the aforementioned embodiments, the preset protocol may add the IP of the peer to the head of the authorization information packet, and add the port number of the peer to the tail of the authorization information packet. For example, four bytes may be added to the head of the authorization information packet, and two bytes may be added to the tail of the authorization information packet. Further, the IP of the peer may be stored in the four bytes of the head of the authorization information packet, and the port number of the peer may be stored in the two bytes of the tail of the authorization information packet, thereby realizing the objective of adding the identification information of the peer to the head and/or tail of the authorization information packet.

It should be noted that, the protocol used to add the IP and the port number of the peer to the authorization information packet may be a protocol described above, but is not limited to the protocols applied in the aforementioned embodiments. For example, the approach of first connecting the IP and port number of the peer and then adding the IP and port number of the peer to the head and/or tail of the authorization information packet may be also applied.

Optionally, based on the aforementioned embodiments, when the target cache acceleration device does not hit the file corresponding to the file identifier, the target cache acceleration device may send the authorization information packet to the peer of the client. The steps of sending the authorization information packet to the peer of the client includes followings.

Step S1016, acquiring the identification information of the peer that is added to the head and/or tail of the authorization information packet, where the identification information of the peer includes: IP address and port number of the peer.

Step S1018, sending the authorization information packet to the peer based on the IP address and the port number of the peer.

In an optional embodiment, in the situation where the target cache acceleration device does not hit the file requested by the client for downloading, the file needs to be requested for downloading from the source peer, and the target cache acceleration device acquires the identification information of the peer from the head and/or tail of the encapsulated authorization information packet. Further, based on the identification information of the peer, the authorization information packet is sent to request the file for downloading that is requested by the client.

It should be noted that, in the aforementioned embodiments, under situations where the proxy is needed for sending data back to source when the target cache acceleration device does not hit the file requested by the client for downloading, because the proxy device stores the identification information of the source peer, the target cache acceleration device may send data back to source using the proxy through the identification information of the stored source peer. However, the aforementioned implementation solutions are not limited to the situations where a proxy is needed to send data back to source due to the fact that the target cache acceleration device does not hit the file requested by the client for downloading, and any scenario that needs the proxy to send data back to source could apply the aforementioned method embodiments.

As such, before sending the authorization information packet to the target cache acceleration device based on the replaced identification information of the authorization information packet, the aforementioned steps of the present disclosure add the identification information of the peer of the authorization information packet to the head and/or tail of the authorization information packet with replaced identification information. When the target cache acceleration device does not hit the file corresponding to the file identifier, the identification information of the peer added to the head and/or tail of the authorization information packet is acquired, and the authorization information packet is sent to the peer based on the IP address and port number of the peer. The aforementioned solution solves the issue that the proxy cannot send data back to source due to the loss of the source data (e.g., identification information of a peer) during the P2P acceleration process.

FIG. 2 illustrates a schematic view of an optional P2P data acceleration method according to embodiments of the present disclosure. With reference to the example shown in FIG. 2, an optional embodiment of the aforementioned P2P data acceleration method is described hereinafter.

The client requests to acquire a peer IP list from a P2P application server through the Internet, and the P2P application server sends the peer IP list to the client. The client searches for a destination peer that needs to download a file from the peer IP list, uses the identification information of the destination peer as the destination identification information of the authorization information packet, and sends the authorization information packet to a proxy device.

After acquiring the authorization information packet whose destination identification information is the identification information of the peer, the proxy device stores the identification information of the peer, and acquires the file identifier of the file requested for downloading in the authorization information packet. The proxy device further obtains the identification information of target cache acceleration devices (including the cache acceleration device 1 and the cache acceleration device 2 shown in FIG. 2) that correspond to the file requested for downloading by the client based on the file identifier through the consistent hashing algorithm. The identification information of the peer is replaced with the identification information of the target cache acceleration device. The replaced authorization information packet is packed, and after the head and/or tail of the packed authorization information packet is added with the stored identification information of the peer based on the preset protocol, the authorization information packet is sent to the target cache acceleration device.

After the target cache acceleration device does not hit the downloading request of the client, the target cache acceleration device may, based on the identification information of the peer at the head and/or tail of the authorization information packet, send the authorization information packet to the peer, thereby acquiring the file requested by the client for downloading.

### Embodiment 2

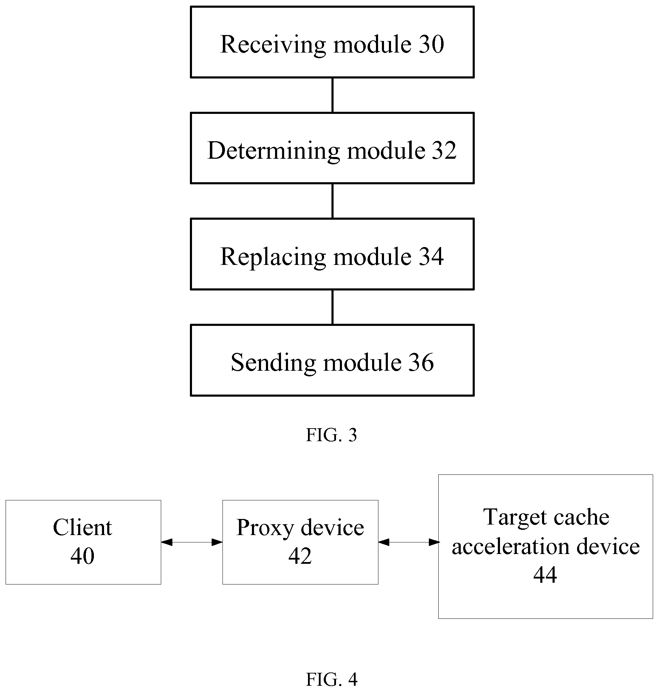

FIG. 3 illustrates a structural schematic view of a P2P data acceleration device according to embodiments of the present disclosure. The device shown in FIG. 3 may be configured to execute any P2P data acceleration method in Embodiment 1. The device includes followings.

A receiving module 30, configured to receive an authorization information packet sent by a client and to acquire a file identifier of the authorization information packet. The file identifier corresponds to a file requested for downloading by the client.

Specifically, the aforementioned authorization information packet may be a handshake packet, and the file identifier may be a file ID configured to characterize the file requested for downloading by different clients. The file identifier may also be a *hash* value calculated based on the file requested for downloading by the client.

In an optional embodiment, the data ingress device (e.g., proxy device) acquires a service data packet sent by a client to a destination server, and by analyzing the content of the service data packet, the P2P handshake packet is obtained based on the characteristics of the handshake packet.

A determining module 32 is configured to, based on the file identifier, obtain identification information of a target cache acceleration device corresponding to the file identifier through a preset algorithm.

Specifically, the identification information of the target cache acceleration device is configured to characterize the target cache acceleration device, and the proxy device may send the data packet to the cache acceleration device corresponding to the identification information based on the identification information of the cache acceleration device.

In an optional embodiment, to satisfy the load balancing requirements of the cache acceleration device, file-downloading demands that are the same may be assigned to the same target cache acceleration device. For example, when the same file ID is acquired, the same cache acceleration device is assigned to the identification information packets that include the same file ID through a preset algorithm.

A replacing module 34 may be configured to replace original destination identification information of the authorization information packet with the identification information of the target cache acceleration device.

Specifically, the original destination end of the authorization information packet is a peer, and the original destination identification information of the aforementioned authorization information packet is the identification information of the peer.

In an optional embodiment, the identification information of the target cache acceleration device may be obtained through the preset algorithm, where the identification information includes IP address and port number. The IP address and the port number of the peer included in the authorization information packet may be replaced with the IP address and the port number of the target cache acceleration device.

A sending module 36 is configured to send the authorization information packet to the target cache acceleration device based on the replaced identification information of the authorization information packet.

In an optional embodiment, after replacing the original destination identification information with the identification information of the target cache acceleration device, the proxy device may send the authorization information packet to the target cache acceleration device based on the identification information of the target cache acceleration device.

In embodiments of the present disclosure, the authorization information packet sent by the client is received through the receiving module, and the file identifier of the authorization information packet is acquired. The identification information of the target cache acceleration device corresponding to the file identifier is obtained by the determining module based on the file identifier through a preset algorithm, and the original destination identification information of the identification information packet is replaced with the identification information of the target cache acceleration device through the replacing module. The authorization information packet is sent by the sending module to the target cache acceleration device based on the replaced identification information of the authorization information packet. In the aforementioned solution, through a preset algorithm, a file ID may be matched with a corresponding target cache acceleration device based on the file ID included in the authorization information packet, and identification information of the matched target cache acceleration device may be acquired. Accordingly, the proxy device may send the authorization information packet to the target cache acceleration device based on the identification information of the target cache acceleration device. Thus, the technical issue in existing P2P cache acceleration techniques that load balancing can hardly be performed on various caching devices when the proxy device and the cache acceleration device are separately deployed may be solved. Accordingly, the technical effects of performing load balancing on the cache acceleration devices are realized, and the user's internet surfing experience is improved.

Optionally, based on the disclosed embodiment, the aforementioned receiving module includes followings.

A first searching module, configured to search for a byte at a preset location of the authorization information packet.

An acquiring module, configured to use the byte at the preset location as a starting point to acquire a preset number of bytes consecutively, thereby obtaining the file identifier.

As such, the aforementioned device may search for the byte at the preset location of the authorization information packet through the first searching module, and via the acquiring module, the device may use the byte at the preset location as the starting point to acquire a preset number of bytes consecutively, thereby obtaining the file identifier. The above-described solution realizes the technical effects of acquiring the file identifier from the authorization information packet.

Optionally, based on the aforementioned embodiments, the aforementioned determining module includes followings.

A second searching module, configured to search for the identification information of the target cache acceleration device corresponding to the file identifier from a preset mapping relationship between file identifiers and cache acceleration devices through the consistent hashing algorithm. In particular, the identification information includes: IP address and port number of the target cache acceleration device.

As such, the identification information of the target cache acceleration device corresponding to the file identifier may be searched for from the preset mapping relationship between the file identifiers and the cache acceleration devices through the consistent hashing algorithm. The aforementioned solution realizes the technical effects of performing load balancing on the cache acceleration devices through the consistent hashing algorithm.

### Embodiment 3

FIG. 4 illustrates a structural schematic view of a P2P data acceleration system according to embodiments of the present disclosure. The system includes followings.

A client 40, configured to send an authorization information packet to a proxy device.

A proxy device 42 that communicates with the client, configured to obtain identification information of a target cache acceleration device corresponding to the file identifier through a preset algorithm based on the file identifier. The proxy device 42 is further configured to replace original destination identification information of the authorization information packet with the identification information of the target cache acceleration device, and to send the authorization information packet to the target cache acceleration device based on the replaced identification information of the authorization information packet. The file identifier corresponds to the file requested for downloading by the client.

Specifically, the aforementioned authorization information packet may be a handshake packet, and the file identifier may be a file ID configured to characterize the file requested for downloading by different clients. The file identifier may also be a *hash* value calculated based on the file requested for downloading by the client. The identification information of the target cache acceleration device is configured to characterize the target cache acceleration device, the proxy device may send the data packet to the cache acceleration device to which the identification information corresponds based on the identification information of the cache acceleration device. The original destination end of the authorization information packet may be a peer, and the original destination identification information of the aforementioned authorization information packet may be the identification information of the peer.

A target cache acceleration device 44 may communicate with the proxy device, and is configured to return the file that corresponds to the file identifier to the proxy device.

In embodiments of the present disclosure, the authorization information packet sent by the client is received, and the file identifier of the authorization information packet is acquired. The identification information of the target cache acceleration device corresponding to the file identifier is obtained based on the file identifier through a preset algorithm, and the original destination identification information of the identification information packet is replaced with the identification information of the target cache acceleration device. The authorization information packet is sent to the target cache acceleration device based on the replaced identification information of the authorization information packet. In the aforementioned solution, a file ID may be matched with a corresponding target cache acceleration device based on the file ID included in the authorization information packet through a preset algorithm, and identification information of the matched target cache acceleration device may be acquired. Accordingly, the proxy device may send the authorization information packet to the target cache acceleration device based on the identification information of the target cache acceleration device. Thus, the technical issue in existing P2P cache acceleration techniques that load balancing can hardly be performed on various caching devices when the proxy device and the cache acceleration device are separately deployed may be solved. Thus, the technical effects of performing load balancing on the cache acceleration devices are realized, and the user's internet surfing experience is improved.

Optionally, based on the aforementioned embodiments, the proxy device may be further configured to store quintuple information of the authorization information packet. When receiving the response information returned by the target cache acceleration device, the proxy device replaces the source address and port number of the response information with the IP address and port number of the peer included in the quintuple information. The quintuple information includes IP address and port number of the client, and the source address and port number of the response information are the IP address and port number of the target cache acceleration device.

As such, in the aforementioned system of the present disclosure, when the proxy device receives the response information returned by the target cache acceleration device, the source address and the port number of the response information are replaced with the IP address and the port number of the client included in the quintuple information to hide the identification information of the target cache acceleration device. The aforementioned solutions prevent the client from attacking the cache acceleration device after knowing the identification information of the cache acceleration device, thereby achieving the technical effects of the device safety of the back-end P2P cache acceleration device.

Optionally, based on the aforementioned embodiments, the target cache acceleration device communicates with the proxy device, and is configured to send the authorization information packet to the peer of the client when the target cache acceleration device does not hit the file corresponding to the file identifier. The proxy device is further configured to add the identification information of the peer of the authorization information packet to head and/or tail of the authorization information packet with replaced identification information based on a preset protocol format.

As such, before sending the authorization information packet to the target cache acceleration device based on the replaced identification information of the authorization information packet, the disclosed system may add the identification information of the peer of the authorization information packet to the head and/or tail of the authorization information packet with replaced identification information. When the target cache acceleration device does not hit the file corresponding to the file identifier, the identification information of the peer added to the head and/or tail of the authorization information packet is acquired, and authorization information packet is sent to the peer based on the IP address and port number of the peer. The aforementioned solution solves the issues that the proxy cannot send data back to source due to the loss of the source data (e.g., identification information of the peer) during the P2P acceleration process.

The foregoing reference numbers of the embodiments of the present disclosure are for illustration only, which do not represent preference of the embodiments.

In the aforementioned embodiments of the present disclosure, descriptions of each embodiment have corresponding focus, and portions of a certain embodiment not described in detail may refer to related descriptions in other embodiments.

In various embodiments of the present disclosure, it should be understood that the disclosed technical solutions may be implemented by other manners. In other words, the device embodiments described above are merely for illustrative purposes. For example, the units may be merely partitioned by logic function. In practice, other partition manners may also be possible. For example, various units or components may be combined or integrated into another system, or some features may be omitted or left unexecuted. Further, mutual coupling or direct coupling or communication connection displayed or discussed therebetween may be via indirect coupling or communication connection of some communication ports, devices, or units, in electrical or other manners.

Units described as separated components may or may not be physically separated, and the components displayed as units may or may not be physical units. That is, the components may be located at one position or may be distributed over various units. Optionally, some or all of the units may be selected to realize the purpose of solutions of embodiments herein according to practical needs.

Further, each functional unit in each embodiment of the present disclosure may be integrated in one processing unit, or each unit may exist physically and individually, or two or more units may be integrated in one unit. The aforementioned integrated units may be implemented as in the form of hardware, or implemented using the form of software function units.

When the described integrated units are implemented using the form of software function units, and are sold or used as independent products, they may be stored in a computer accessible storage medium. Based on such understanding, the technical solutions of the present disclosure, or the portions contributing to the prior art may be embodied in the form of a software product. The computer software product may be stored in a storage medium, and include several instructions to instruct a computer device (e.g., a personal computer, a server, or a network device) to execute all or some of the method steps of each embodiment. The storage medium described above may include flash drive, read-only memory (ROM), random access memory (RAM), a portable disc, a magnetic disc, an optical disc or various other media that may store program codes.

The foregoing are only preferred implementation methods of the present disclosure.

## Claims

1. A P2P data acceleration method, comprising:
Receiving (Step S102) an authorization information packet sent by a client (40), and acquiring (Step S1016) a file identifier of the authorization information packet, wherein the file identifier corresponds to a file requested for downloading by the client;
based on the file identifier, obtaining (Step S104; Step S1021, Step S1023) identification information of a target cache acceleration device (44) corresponding to the file identifier through a preset algorithm;
replacing (Step S106; Step S1012) original destination identification information of the authorization information packet with identification information of the target cache acceleration device; and
sending (Step S108; Step S1018) the authorization information packet to the target cache acceleration device based on the replaced identification information of the authorization information packet.

2. The method according to claim 1, wherein, acquiring (Step S1016) the file identifier of the authorization information packet comprises:
searching (Step S1021) for a byte at a preset location of the authorization information packet; and
using (Step S1023) the byte at the preset location as a starting point to acquire a preset number of bytes consecutively, thereby obtaining the file identifier.

3. The method according to claim 2, wherein, based on the file identifier, obtaining the identification information of the target cache acceleration device corresponding to the file identifier through the preset algorithm comprises:
searching (Step S1025) for the identification information of the target cache acceleration device corresponding to the file identifier from a preset mapping relationship between file identifiers and cache acceleration devices through consistent hashing algorithm, wherein the identification information of the target cache acceleration device includes: IP address and port number of the target cache acceleration device.

4. The method according to any one of claims 1-3, wherein, after receiving the authorization information packet sent by the client, the method further comprising:
storing (Step S1010) quintuple information of the authorization information packet at a proxy device (42), wherein the quintuple information includes IP address and port number of the client.

5. The method according to claim 4, wherein, when receiving response information returned by the target cache acceleration device, the proxy device hides the identification information of the target cache acceleration device, wherein steps of hiding the identification information of the target cache acceleration device includes:
Replacing (Step S1012), by the proxy device, source address and port number of the response information with IP address and port number of a peer included in the quintuple information, wherein the source address and the port number of the response information are IP address and port number of the target cache acceleration device.

6. The method according to claim 5, wherein, if within a preset period of time, quintuple information same as the stored quintuple information is detected, the authorization information packet corresponding to the quintuple information that is the same as the stored quintuple information performs data interaction based on a path of the authorization information packet corresponding to the stored quintuple information.

7. The method according to claims 1-3, wherein, before sending the authorization information packet to the target cache acceleration device based on the replaced identification information of the authorization information packet, the method further comprises:
adding (Step S1014) identification information of a peer of the authorization information packet to head and/or tail of the authorization information packet with replaced identification information based on a preset protocol format, wherein the identification information of the peer is original destination identification information.

8. The method according to claim 7, wherein, when the target cache acceleration device does not hit the file that corresponds the file identifier, the target cache acceleration device sends the authorization information packet to the peer of the client, wherein steps of sending the authorization information packet to the peer of the client comprises:
acquiring (Step S1016) the identification information of the peer that is added to the head and/or tail of the authorization information packet, wherein the identification information of the peer includes: IP address and port number of the peer; and
sending (Step S1018) the authorization information packet to the peer based on the IP address and the port number of the peer.

9. A P2P data acceleration device, comprising:
a receiving module (30), configured to receive an authorization information packet sent by a client (40) and acquire a file identifier of the authorization information packet, wherein the file identifier corresponds to a file requested for downloading by the client;
a determining module (32), configured to, based on the file identifier, obtain identification information of a target cache acceleration device (44) corresponding to the file identifier through a preset algorithm;
a replacing module (34), configured to replace original destination identification information of the authorization information packet with the identification information of the target cache acceleration device; and
a sending module (36), configured to send the authorization information packet to the target cache acceleration device based on the replaced identification information of the authorization information packet.

10. The device according to claim 9, wherein, the receiving module comprises:
a first searching module, configured to search for a byte at a preset location of the authorization information packet;
an acquiring module, configured to use the byte at the preset location as a starting point to acquire a preset number of bytes consecutively, thereby obtaining the file identifier.

11. The device according to claim 10, wherein, the determining module comprises:
a second searching module, configured to search for the identification information of the target cache acceleration device corresponding to the file identifier from a preset mapping relationship between file identifiers and cache acceleration devices through consistent hashing algorithm, wherein the identification information includes: IP address and port number of the target cache acceleration device.

12. A P2P data acceleration system, comprising:
a client (40), configured to send an authorization information packet to a proxy device (42);
the proxy device (42) that communicates with the client, configured to, based on a file identifier, obtain identification information of a target cache acceleration device (44) corresponding to the file identifier through a preset algorithm, replace original destination identification information of the authorization information packet with the identification information of the target cache acceleration device, and send the authorization information packet to the target cache acceleration device based on the replaced identification information of the authorization information packet, wherein the file identifier corresponds to a file requested for downloading by the client;
a target cache acceleration device (44) communicates with the proxy device, configured to return the file that corresponds to the file identifier to the proxy device.

13. The system according to claim 12, wherein:
the proxy device is further configured to store quintuple information of the authorization information packet, and when receiving response information returned by the target cache acceleration device, the proxy device replaces source address and port number of the response information with IP address and port number of a peer included in the quintuple information, wherein the quintuple information includes IP address and port number of the client, and the source address and port number of the response information are the IP address and port number of the target cache acceleration device.

14. The system according to claim 12, wherein, the target cache acceleration device is further configured to, when the target cache acceleration device does not hit the file corresponding to the file identifier, send the authorization information packet to a peer of the client, and the proxy device is further configured to add identification information of the peer of the authorization information packet to head and/or tail of the authorization information packet with replaced identification information based on a preset protocol format.

## Patentansprüche

1. P2P-Datenbeschleunigungsverfahren, das Folgendes umfasst:
Empfangen (Schritt S102) eines Berechtigungsinformationspakets, das von einem Client (40) gesendet wurde, und Erwerben (Schritt S1016) eines Dateiidentifizierers des Berechtigungsinformationspakets, wobei der Dateiidentifizierer einer Datei entspricht, die von dem Client zum Herunterladen angefordert wurde;
basierend auf dem Dateiidentifizierer, Erhalten (Schritt S104; Schritt S1021, Schritt S1023) von Identifikationsinformation einer Beschleunigungsvorrichtung des Ziel-Zwischenspeichers (44), die dem Dateiidentifizierer entspricht, durch einen voreingestellten Algorithmus;
Ersetzen (Schritt S106; Schritt S1012) der ursprünglichen Identifikationsinformation des Bestimmungsortes des Berechtigungsinformationspakets durch Identifikationsinformation der Beschleunigungsvorrichtung des Ziel-Zwischenspeichers; und
Senden (Schritt S108; Schritt S1018) des Berechtigungsinformationspakets an die Beschleunigungsvorrichtung des Ziel-Zwischenspeichers, basierend auf der ersetzten Identifikationsinformation des Berechtigungsinformationspakets.

2. Verfahren nach Anspruch 1, wobei das Erwerben (Schritt S1016) des Dateiidentifizierers des Berechtigungsinformationspakets Folgendes umfasst:
Suchen (Schritt S1021) nach einem Byte an einem vorgegebenen Platz des Berechtigungsinformationspakets; und
Verwenden (Schritt S1023) des Bytes an dem vorgegebenen Platz als Anfangspunkt, um aufeinanderfolgend eine vorgegebene Anzahl von Bytes zu erwerben, wodurch der Dateiidentifizierer erhalten wird.

3. Verfahren nach Anspruch 2, wobei, basierend auf dem Dateiidentifizierer, das Erhalten der Identifikationsinformation der Beschleunigungsvorrichtung des Ziel-Zwischenspeichers, die dem Dateiidentifizierer entspricht, durch den vorgegebenen Algorithmus Folgendes umfasst:
Suchen (Schritt S1025) nach der Identifikationsinformation der Beschleunigungsvorrichtung des Ziel-Zwischenspeichers, die dem Dateiidentifizierer entspricht, aus einer vorgegebenen Zuordnungsbeziehung zwischen Dateiidentifizierern und Beschleunigungsvorrichtungen des Zwischenspeichers durch einen einheitlichen Hash-Algorithmus, wobei die Identifikationsinformation der Beschleunigungsvorrichtung des Ziel-Zwischenspeichers Folgendes einschließt:
IP-Adresse und Anschlussnummer der Beschleunigungsvorrichtung des Ziel-Zwischenspeichers.

4. Verfahren nach einem der Ansprüche 1 bis 3, wobei das Verfahren nach dem Empfangen des vom Client gesendeten Berechtigungsinformationspakets ferner Folgendes umfasst:
Speichern (Schritt S1010) der fünffachen Information des Berechtigungsinformationspakets an einer Proxy-Vorrichtung (42), wobei die fünffache Information die IP-Adresse und die Anschlussnummer des Clients einschließt.

5. Verfahren nach Anspruch 4, wobei beim Empfangen von Antwortinformation, die von der Beschleunigungsvorrichtung des Ziel-Zwischenspeichers zurückgegeben wurde, die Proxy-Vorrichtung die Identifikationsinformation der Beschleunigungsvorrichtung des Ziel-Zwischenspeichers versteckt, wobei die Schritte des Versteckens der Identifikationsinformation der Beschleunigungsvorrichtung des Ziel-Zwischenspeichers Folgendes einschließen:
Ersetzen (Schritt S1012) der Quelladresse und der Anschlussnummer der Antwortinformation durch die Proxy-Vorrichtung mit der IP-Adresse und der Anschlussnummer eines Peers, die in der fünffachen Information eingeschlossen sind, wobei die Quelladresse und die Anschlussnummer der Antwortinformation die IP-Adresse und die Anschlussnummer der Beschleunigungsvorrichtung des Ziel-Zwischenspeichers sind.

6. Verfahren nach Anspruch 5, wobei, wenn innerhalb einer vorgegebenen Zeitspanne eine fünffache Information, die gleich der gespeicherten fünffachen Information ist, erkannt wird, das Berechtigungsinformationspaket, das der fünffachen Information entspricht, die gleich der gespeicherten fünffachen Information ist, eine Dateninteraktion basierend auf einem Pfad des Berechtigungsinformationspakets durchführt, das der gespeicherten fünffachen Information entspricht.

7. Verfahren nach den Ansprüchen 1 bis 3, wobei vor dem Senden des Berechtigungsinformationspakets an die Beschleunigungsvorrichtung des Ziel-Zwischenspeichers, basierend auf der ersetzten Identifikationsinformation des Berechtigungsinformationspakets, das Verfahren ferner Folgendes umfasst:
Hinzufügen (Schritt S1014) von Identifikationsinformation eines Peers des Berechtigungsinformationspakets zu dem Kopf und/oder Schwanz des Berechtigungsinformationspakets mit ersetzter Identifikationsinformation, basierend auf einem vorgegebenen Protokollformat, wobei die Identifikationsinformation des Peers die ursprüngliche Identifikationsinformation des Bestimmungsorts ist.

8. Verfahren nach Anspruch 7, wobei, wenn die Beschleunigungsvorrichtung des Ziel-Zwischenspeichers nicht die Datei trifft, die dem Dateiidentifizierer entspricht, die Beschleunigungsvorrichtung des Ziel-Zwischenspeichers das Berechtigungsinformationspaket an den Peer des Clients sendet, wobei die Schritte des Sendens des Berechtigungsinformationspakets an den Peer des Clients Folgendes umfassen:
Erwerben (Schritt S1016) der Identifikationsinformation des Peers, die dem Kopf und/oder Schwanz des Berechtigungsinformationspakets hinzugefügt wird, wobei die Identifikationsinformation des Peers Folgendes einschließt:
IP-Adresse und Anschlussnummer des Peers; und
Senden (Schritt S1018) des Berechtigungsinformationspakets an den Peer basierend auf der IP-Adresse und der Anschlussnummer des Peers.

9. P2P-Datenbeschleunigungsvorrichtung, die Folgendes umfasst:
ein Empfangsmodul (30), das konfiguriert ist, um ein Berechtigungsinformationspaket zu empfangen, das von einem Client (40) gesendet wird, und einen Dateiidentifizierer des Berechtigungsinformationspakets zu erwerben, wobei der Dateiidentifizierer einer Datei entspricht, die von dem Client zum Herunterladen angefordert wird;
ein Bestimmungsmodul (32), das konfiguriert ist, um, basierend auf dem Dateiidentifizierer, Identifikationsinformation einer Beschleunigungsvorrichtung des Ziel-Zwischenspeichers (44), die dem Dateiidentifizierer entspricht, durch einen vorgegebenen Algorithmus zu erhalten;
ein Ersetzungsmodul (34), das konfiguriert ist, um die ursprüngliche Identifikationsinformation des Bestimmungsorts des Berechtigungsinformationspakets mit der Identifikationsinformation der Beschleunigungsvorrichtung des Ziel-Zwischenspeichers zu ersetzen; und
ein Sendemodul (36), das konfiguriert ist, um das Berechtigungsinformationspaket basierend auf der ersetzten Identifikationsinformation des Berechtigungsinformationspakets an die Beschleunigungsvorrichtung des Ziel-Zwischenspeichers zu senden.

10. Vorrichtung nach Anspruch 9, wobei das Empfangsmodul Folgendes umfasst:
ein erstes Suchmodul, das konfiguriert ist, um an einem vorgegebenen Platz des Berechtigungsinformationspakets nach einem Byte zu suchen;
ein Erwerbungsmodul, das konfiguriert ist, um das Byte an dem vorgegebenen Platz als Anfangspunkt zu verwenden, um eine vorgegebene Anzahl von Bytes aufeinanderfolgend zu erwerben, wodurch der Dateiidentifizierer erhalten wird.

11. Vorrichtung nach Anspruch 10, wobei das Bestimmungsmodul Folgendes umfasst:
ein zweites Suchmodul, das konfiguriert ist, um nach der Identifikationsinformation der Beschleunigungsvorrichtung des Ziel-Zwischenspeichers zu suchen, die dem Dateiidentifizierer aus einer vorgegebenen Zuordnungsbeziehung zwischen Dateiidentifizierern und Beschleunigungsvorrichtungen des Zwischenspeichers durch einen einheitlichen Hash-Algorithmus entspricht, wobei die Identifikationsinformation Folgendes einschließt:
IP-Adresse und Anschlussnummer der Beschleunigungsvorrichtung des Ziel-Zwischenspeichers.

12. P2P-Datenbeschleunigungssystem, das Folgendes umfasst:
einen Client (40), der konfiguriert ist, um ein Berechtigungsinformationspaket an eine Proxy-Vorrichtung (42) zu senden;
wobei die Proxy-Vorrichtung (42), die mit dem Client kommuniziert, konfiguriert ist, um, basierend auf einem Dateiidentifizierer, Identifikationsinformation einer Beschleunigungsvorrichtung des Ziel-Zwischenspeichers (44), die dem Dateiidentifizierer entspricht, durch einen vorgegebenen Algorithmus zu erhalten, die ursprüngliche Identifikationsinformation des Bestimmungorts des Berechtigungsinformationspakets mit der Identifikationsinformation der Beschleunigungsvorrichtung des Ziel-Zwischenspeichers zu ersetzen, und das Berechtigungsinformationspaket an die Beschleunigungsvorrichtung des Ziel-Zwischenspeichers basierend auf der ersetzten Identifikationsinformation des Berechtigungsinformationspakets zu senden, wobei der Dateiidentifizierer einer Datei entspricht, die vom Client zum Herunterladen angefordert wird;
eine Beschleunigungsvorrichtung des Ziel-Zwischenspeichers (44), die mit der Proxy-Vorrichtung kommuniziert, und konfiguriert ist, um die Datei, die dem Dateiidentifizierer entspricht, an die Proxy-Vorrichtung zurückzugeben.

13. System nach Anspruch 12, wobei:
die Proxy-Vorrichtung ferner konfiguriert ist, um fünffache Information des Berechtigungsinformationspakets zu speichern, und wenn Antwortinformation empfangen wird, die von der Beschleunigungsvorrichtung des Ziel-Zwischenspeichers zurückgegeben wurde, ersetzt die Proxy-Vorrichtung die Quelladresse und die Anschlussnummer der Antwortinformation durch die IP-Adresse und die Anschlussnummer eines Peers, die in der fünffachen Information eingeschlossen sind, wobei die fünffache Information die IP-Adresse und die Anschlussnummer des Clients einschließt, und die Quelladresse und die Anschlussnummer der Antwortinformation die IP-Adresse und die Anschlussnummer der Beschleunigungsvorrichtung des Ziel-Zwischenspeichers sind.

14. System nach Anspruch 12, wobei die Beschleunigungsvorrichtung des Ziel-Zwischenspeichers ferner konfiguriert ist, um, wenn die Beschleunigungsvorrichtung des Ziel-Zwischenspeichers nicht auf die Datei trifft, die dem Dateiidentifizierer entspricht, das Berechtigungsinformationspaket an einen Peer des Clients zu senden, und die Proxy-Vorrichtung ferner konfiguriert ist, um Identifikationsinformation des Peers des Berechtigungsinformationspakets an den Kopf und/oder den Schwanz des Berechtigungsinformationspakets mit ersetzter Identifikationsinformation basierend auf einem vorgegebenen Protokollformat hinzuzufügen.

## Revendications

1. Procédé d'accélération de données P2P, comprenant :
la réception (Étape S102) d'un paquet d'informations d'autorisation envoyé par un client (40), et l'acquisition (Étape S1016) d'un identifiant de fichier du paquet d'informations d'autorisation, l'identifiant de fichier correspondant à un fichier demandé par le client en vue de le télécharger ;
sur la base de l'identifiant de fichier, l'obtention (Étape S104 ; Étape S1021,
Étape S1023) d'informations d'identification d'un dispositif d'accélération de mise en cache cible (44) correspondant à l'identifiant de fichier par l'intermédiaire d'un algorithme prédéfini ;
le remplacement (Étape S106 ; Étape S1012) d'informations d'identification de destination d'origine du paquet d'informations d'autorisation par des informations d'identification du dispositif d'accélération de mise en cache cible ; et
l'envoi (Étape S108 ; Étape S1018) du paquet d'informations d'autorisation au dispositif d'accélération de mise en cache cible sur la base des informations d'identification remplacées du paquet d'informations d'autorisation.

2. Procédé selon la revendication 1, dans lequel l'acquisition (Étape S1016) de l'identifiant de fichier du paquet d'informations d'autorisation comprend :
la recherche (Étape S1021) d'un octet à un emplacement prédéfini du paquet d'informations d'autorisation ; et
l'utilisation (Étape S1023) de l'octet à l'emplacement prédéfini comme point de départ pour acquérir un nombre prédéfini d'octets consécutivement, ce qui permet d'obtenir l'identifiant de fichier.

3. Procédé selon la revendication 2, dans lequel, sur la base de l'identifiant de fichier, l'obtention des informations d'identification du dispositif d'accélération de mise en cache cible correspondant à l'identifiant de fichier par l'intermédiaire de l'algorithme prédéfini comprend :
la recherche (Étape S1025) des informations d'identification du dispositif d'accélération de mise en cache cible correspondant à l'identifiant de fichier à partir d'une relation d'application prédéfinie entre identifiants de fichier et dispositifs d'accélération de mise en cache par l'intermédiaire d'un algorithme de hachage cohérent, les informations d'identification du dispositif d'accélération de mise en cache cible incluant : l'adresse IP et le numéro de port du dispositif d'accélération de mise en cache cible.

4. Procédé selon l'une quelconque des revendications 1 à 3, après la réception du paquet d'informations d'autorisation envoyé par le client, le procédé comprenant en outre :
le stockage (Étape S1010) d'informations quintuples du paquet d'informations d'autorisation au niveau d'un dispositif mandataire (42), les informations quintuples incluant l'adresse IP et le numéro de port du client.

5. Procédé selon la revendication 4, dans lequel, lors de la réception d'informations de réponse renvoyées par le dispositif d'accélération de mise en cache cible, le dispositif mandataire dissimule les informations d'identification du dispositif d'accélération de mise en cache cible, les étapes consistant à dissimuler les informations d'identification du dispositif d'accélération de mise en cache cible incluant :
le remplacement (Étape S1012), par le dispositif mandataire, de l'adresse source et du numéro de port des informations de réponse par l'adresse IP et le numéro de port d'un homologue inclus dans les informations quintuples, l'adresse source et le numéro de port des informations de réponse sont l'adresse IP et le numéro de port du dispositif d'accélération de mise en cache cible.

6. Procédé selon la revendication 5, dans lequel, si, dans une période prédéfinie, des informations quintuples identiques aux informations quintuples stockées sont détectées, le paquet d'informations d'autorisation correspondant aux informations quintuples qui sont identiques aux informations quintuples stockées effectue une interaction de données en fonction d'un chemin du paquet d'informations d'autorisation correspondant aux informations quintuples stockées.

7. Procédé selon les revendications 1 à 3, dans lequel, avant l'envoi du paquet d'informations d'autorisation au dispositif d'accélération de mise en cache cible sur la base des informations d'identification remplacées du paquet d'informations d'autorisation, le procédé comprend en outre :
l'ajout (Étape S1014) d'informations d'identification d'un homologue du paquet d'informations d'autorisation à la tête et/ou à la queue du paquet d'informations d'autorisation avec des informations d'identification remplacées sur la base d'un format de protocole prédéfini, les informations d'identification de l'homologue étant des informations d'identification de destination d'origine.

8. Procédé selon la revendication 7, dans lequel, lorsque le dispositif d'accélération de mise en cache cible n'atteint pas le fichier qui correspond à l'identifiant de fichier, le dispositif d'accélération de mise en cache cible envoie le paquet d'informations d'autorisation à l'homologue du client, les étapes d'envoi du paquet d'informations d'autorisation à l'homologue du client comprenant :
l'acquisition (Étape S1016) des informations d'identification de l'homologue qui sont ajoutées à la tête et/ou à la queue du paquet d'informations d'autorisation, les informations d'identification de l'homologue incluant : une adresse IP et un numéro de port de l'homologue ; et
l'envoi (Étape S1018) du paquet d'informations d'autorisation à l'homologue sur la base de l'adresse IP et du numéro de port de l'homologue.

9. Dispositif d'accélération de données P2P, comprenant :
un module de réception (30), configuré pour recevoir un paquet d'informations d'autorisation envoyé par un client (40) et acquérir un identifiant de fichier du paquet d'informations d'autorisation, l'identifiant de fichier correspondant à un fichier demandé par le client en vue de le télécharger ;
un module de détermination (32), configuré pour, sur la base de l'identifiant de fichier, obtenir des informations d'identification d'un dispositif d'accélération de mise en cache cible (44) correspondant à l'identifiant de fichier par l'intermédiaire d'un algorithme prédéfini ;
un module de remplacement (34), configuré pour remplacer les informations d'identification de destination d'origine du paquet d'informations d'autorisation par les informations d'identification du dispositif d'accélération de mise en cache cible ; et
un module d'envoi (36), configuré pour envoyer le paquet d'informations d'autorisation au dispositif d'accélération de mise en cache cible sur la base des informations d'identification remplacées du paquet d'informations d'autorisation.

10. Dispositif selon la revendication 9, dans lequel le module de réception comprend :
un premier module de recherche, configuré pour rechercher un octet à un emplacement prédéfini du paquet d'informations d'autorisation ;
un module d'acquisition, configuré pour utiliser l'octet situé à l'emplacement prédéfini comme point de départ pour acquérir un nombre prédéfini d'octets de manière consécutive, ce qui permet d'obtenir l'identifiant de fichier.

11. Dispositif selon la revendication 10, dans lequel le module de détermination comprend :
un second module de recherche, configuré pour rechercher les informations d'identification du dispositif d'accélération de mise en cache cible correspondant à l'identifiant de fichier à partir d'une relation d'application prédéfinie entre identifiants de fichier et dispositifs d'accélération de mise en cache par l'intermédiaire d'un algorithme de hachage cohérent, les informations d'identification incluant : l'adresse IP et le numéro de port du dispositif d'accélération de mise en cache cible.

12. Système d'accélération de données P2P, comprenant :
un client (40), configuré pour envoyer un paquet d'informations d'autorisation à un dispositif mandataire (42) ;
le dispositif mandataire (42) qui communique avec le client, configuré pour, sur la base d'un identifiant de fichier, obtenir des informations d'identification d'un dispositif d'accélération de mise en cache cible (44) correspondant à l'identifiant de fichier par l'intermédiaire d'un algorithme prédéfini, remplacer des informations d'identification de destination d'origine du paquet d'informations d'autorisation par les informations d'identification du dispositif d'accélération de mise en cache cible, et envoyer le paquet d'informations d'autorisation au dispositif d'accélération de mise en cache cible sur la base des informations d'identification remplacées du paquet d'informations d'autorisation, l'identifiant de fichier correspondant à un fichier demandé par le client en vue de le télécharger ;
un dispositif d'accélération de mise en cache cible (44) communiquant avec le dispositif mandataire, configuré pour renvoyer le fichier qui correspond à l'identifiant de fichier au dispositif mandataire.

13. Système selon la revendication 12, dans lequel :
le dispositif mandataire est en outre configuré pour stocker des informations quintuples du paquet d'informations d'autorisation, et lors de la réception des informations de réponse renvoyées par le dispositif d'accélération de mise en cache cible, le dispositif mandataire remplace l'adresse source et le numéro de port des informations de réponse par l'adresse IP et le numéro de port d'un homologue inclus dans les informations quintuples, les informations quintuples incluant l'adresse IP et le numéro de port du client, et l'adresse source et le numéro de port des informations de réponse étant l'adresse IP et le numéro de port du dispositif d'accélération de mise en cache cible.

14. Système selon la revendication 12, dans lequel le dispositif d'accélération de mise en cache cible est en outre configuré pour, lorsque le dispositif d'accélération de mise en cache cible n'atteint pas le fichier correspondant à l'identifiant de fichier, envoyer le paquet d'informations d'autorisation à un homologue du client, et le dispositif mandataire est en outre configuré pour ajouter des informations d'identification de l'homologue du paquet d'informations d'autorisation à la tête et/ou à la queue du paquet d'informations d'autorisation avec des informations d'identification remplacées sur la base d'un format de protocole prédéfini.
